# EUROPEAN PATENT APPLICATION

(11) **EP 3 101 852 A1**
(43) Date of publication of application: **07.12.2016**
(21) Application number: 15290147.6
(22) Date of filing: 04.06.2015
(51) Int. Cl.: H04L 12/851, H04L 12/801, H04L 12/891

(54) **AN EARLY CONGESTION DETECTION DEVICE AND THE RELATED METHOD FOR DEADLINE-AWARE FLOWS**

(71) Applicant: ALCATEL LUCENT, 92100 Boulogne-Billancourt (FR)
(72) Inventor: Tang, M Siyu, 2018 Antwerpen (BE)
(74) Representative: Plas, Axel Ivo Michel

(57) **Abstract**

An early congestion detection device (100) for deadline-aware flows (2) in a deadline-aware system (1), comprising:
- a flow receiving unit (101) receiving a plurality of said deadline-aware flows (2) comprising respective required deadlines (20) for delivery to an endpoint (5);
- a minimum capacity calculation unit (102) calculating a minimum capacity (10) required for timely delivery of a deadline-aware flow (2);
- an available capacity measuring unit (103) measuring an available capacity (11) of said deadline-aware system (1);
- a comparing unit (104) calculating a difference (12) between said available capacity (11) and said minimum capacity (10) and further comparing said difference (12) with a first threshold (13); and
- an early congestion signal generator (105) triggering an early congestion notification (4) when said difference (12) is below said first threshold (13).

## Description

### Technical Field

The present invention relates to the early detection and avoidance of network congestion in deadline-aware systems.

### Background

Throughput is the amount of data that passes through a network per unit of time, such as the number of packets of flows per second. Network congestion is the situation in which an increase in data transmissions results in a proportionately smaller increase, or even a reduction, in throughput. In other words, when a network is congested, the more data one tries to send, the less data is actually successfully sent. More particularly, network congestion in Internet Protocol networking leads to degraded networking performance such as throughput reduction and unpredicted end-to-end latency, also referred to as E2E latency.

The emergence of applications such as on-line gaming or augmented reality increases the demand in interactive content. A major challenge in IP networking is the timely delivery of flows. In case of insufficient network capacity, timely delivery of traffic can no longer be guaranteed. In a deadline-aware system, a deadline-aware sender probes for the available bandwidth of the network by gradually increasing the sending rate or the video quality in accordance with the actual available network resource. If a sender increases its sending rate or its video quality too fast, the system is under a risk of over-utilization. On the other hand, if a sender increases the sending rate or the video quality too slow, it may take too long for the network resource to be fully utilized.

The Shared Content Addressing Protocol, also referred to as SCAP, is a proposed deadline-aware scheme that prioritizes bits that have the most urgent deadline at the expense of the delivery of less urgent bits. According to the SCAP, the packets whose requested deadlines are violated will be dropped as the congestion signal for the clients that initiated the request.

In the context of the SCAP, when the deadline-aware system judges data transmission unreliable, the packets whose requested deadlines are violated are dropped, which consequently impairs the viewing experience at the end-user side. In the case where the deadline-aware system judges data transmission reliable, the packets whose requested deadlines are violated are being retransmitted, which consequently increases the E2E delay. For the end-user, such network congestion results in a reduced quality of experience, for example when the end-user is confronted with video stalls, and/or choppy VoIP communications, and/or a poor web browsing experience and/or frustrating online gaming performance. This network congestion is also considered detrimental to the system itself as it impairs its merit of deadline-awareness and in-time delivery. Additionally, in the context of the SCAP, packets are dropped only when violations of deadlines have already detected by the deadline-aware system. Detection of network congestion therefore implies that one or more deadlines have already been violated. In other words, existing deadline-aware systems do not implement measures to guarantee the viewing experience at the end-user side.

Other existing solutions to network congestion rely on active queue management, shortened to AQM, or explicit congestion notification, shortened to ECN. These two schemes aim at maintaining the length of the queue below a predefined threshold such that an overflow of the buffer can be avoided and that the E2E latency can be minimized. Such algorithms, for example the Adaptive Random Early Detection, also referred to as ARED, or the controlled delay scheduling algorithm, also referred to as CoDel, or the Proportional Integral controller-Enhanced, also referred to as PIE, are prominent examples of AQM schemes. In conventional IP networks, such algorithms manage the rate *p* at which packets are dropped, or the rate *p* at which packets are marked when ECN is activated, as a function of queue occupancy *q_{avg}.* For example, as depicted in Fig. 1 of the present patent application, in the case of the ARED scheme, the rate *p* depends on two thresholds *tₘᵢₙ* and *tₘₐₓ.* If the average length of the queue is smaller than *tₘᵢₙ,* none of the packets are dropped or marked. If the average length of the queue is larger than *tₘₐₓ,* all the packets are dropped or marked. In the case where *tₘᵢₙ*≤*q_{avg}*≤*tₘₐₓ,* the dropping or marking rate *p* increases proportionally to the average queue occupancy *q_{avg}.* Other AQM schemes, such as the CoDel or the PIE algorithms rely on different dropping functions, but the underlying rationale remains identical to the one of the ARED scheme: the aim is to control the dropping rate or marking rate as a function of the detected length of the queue or as a function of the queue latency.

The aforementioned AQM schemes are not applicable to deadline-aware systems due to the different scheduling methodologies that are being employed. Indeed, a packet is for example served in a first-in-first-out pattern in a queue in an ARED or a CoDel or a PIE scheme while an earliest deadline first scheduler, also referred to as an EDF scheduler, is typically used to schedule deadline-aware packets. Additionally, the average length of a queue in an EDF system does not reveal the likelihood that network congestion is going to occur. This increases the risk that the viewing experience at the end-user side is jeopardized by an occurring network congestion.

### Summary of the Invention

It is an objective to disclose a device and the related method that overcome the above identified shortcomings of existing solutions. More particularly, it is an objective to disclose a device and the related method that detect and avoid early congestion in deadline-aware systems, thereby improving the quality of experience of deadline-aware applications and further efficiently managing the network resource consumption.

According to a first aspect of the present invention, the above defined objectives are realized by an early congestion detection device for deadline-aware flows in a deadline-aware system, the early congestion detection device comprising:
- a flow receiving unit, adapted to receive a plurality of deadline-aware flows, each deadline-aware flow comprising a respective required deadline for delivery to an endpoint by the deadline-aware system;
- a minimum capacity calculation unit, adapted to calculate a minimum capacity required for timely delivery of a deadline-aware flow;
- an available capacity measuring unit, adapted to measure an available capacity of the deadline-aware system;
- a comparing unit, adapted to calculate a difference between the available capacity and the minimum capacity and further adapted to compare the difference with a first threshold; and
- an early congestion signal generator, adapted to trigger an early congestion notification when the difference is below the first threshold.

The early congestion detection device in accordance with the present invention is adapted to determine whether the available capacity of the deadline-aware system is sufficient to serve the current capacity usage of the deadline-aware system by a plurality of deadline-aware flows with deadline requirements. The available capacity of the deadline-aware system is for example an available bandwidth of the deadline-aware system, or a measured actual delivery time of the deadline-aware flows, etc. Upon reception of deadline-aware flows at the flow receiving unit, the minimum capacity calculation unit calculates the minimum capacity that is required to deliver all the deadline-aware flows according to deadline requirements to an endpoint of the deadline-aware system, i.e. the minimum capacity that is required to deliver all the deadline-aware flows before or at their respective required deadlines for delivery to the endpoint. For example, the minimum capacity is the minimum bandwidth required for timely delivery of the deadline-aware flows, or the maximum requested delivery time of each of the deadline-aware flows to the endpoint, etc. If the difference between the available capacity and the minimum capacity of the deadline-aware system is above a first threshold, the available capacity of the deadline-aware system allows to deliver all the deadline-aware flows according to their respective required deadlines. In other words, if the difference between the available capacity and the minimum capacity of the deadline-aware system is above a first threshold, the likelihood that an early congestion occurs is low and the quality of experience of deadline-aware applications depending on the available capacity is therefore guaranteed. The early congestion signal generator therefore does not trigger an early congestion notification. On the other hand, if the difference between the available capacity and the minimum capacity of the deadline-aware system is below a first threshold, the likelihood that an early congestion occurs is high and the risk that the quality of experience of deadline-aware application is jeopardized increases. As a consequence, the early congestion signal generator triggers an early congestion notification in order to avoid violation of the deadlines of the deadline-aware flows, thereby notifying the deadline-aware system that an early congestion has been detected. In other words, the early congestion detection device pro-actively triggers early congestion notification when early congestion is detected and before any deadline of the deadline-aware flows has been violated. Upon reception of the early congestion notification, sender-side measures are taken in order to avoid the detected early congestion. This pro-active design for the management of the consumption of the available capacity of the deadline-aware system is a simple solution to efficiently maximize the usage of the available capacity of the deadline-aware system.

The plurality of deadline-aware flows is sent by a sender of the deadline-aware system. According to an alternative embodiment, the plurality of deadline-aware flows is sent by more than one senders of the deadline-aware system. An endpoint of the deadline-aware system may be any entity of the deadline-aware system, for example a user, a router, an access point, a server of the deadline-aware system, etc.

According to an optional embodiment:
- the minimum capacity relates to a minimum bandwidth required for timely delivery of the deadline-aware flows; and
- the available capacity relates to an available bandwidth of the deadline-aware system.

The minimum capacity corresponds to a minimum bandwidth required for timely delivery of the deadline-aware flow. The available capacity corresponds to an available bandwidth of the deadline-aware system. The closeness between the minimum bandwidth required for timely delivery of the deadline-aware flows and the available bandwidth of the deadline-aware system determines whether early congestion will occur, hence whether the early congestion signal generator shall trigger an early congestion notification.

According to an optional embodiment:
- the minimum capacity relates to a requested maximum delivery time of each of the deadline-aware flows to the endpoint;
- the available capacity relates to a measured actual delivery time of the deadline-aware flows;
- the comparing unit is adapted to:
- calculate a difference between the requested maximum delivery time and the actual delivery time for each of the deadline-aware flows, thereby calculating an average running deadline for each of the deadline-aware flows; and
- compare the average running deadline with the first threshold for each of the deadline-aware flows.

The minimum capacity corresponds to a requested maximum delivery time of each of the deadline-aware flows to the endpoint. The available capacity corresponds to measured actual delivery times of the deadline-aware flows. The closeness between the requested maximum delivery time and the measured actual delivery time for each of the deadline-aware flows determines whether early congestion will occur, hence whether the early congestion signal generator shall trigger an early congestion notification.

According to an optional embodiment, the early congestion signal generator is adapted to:
- mark packets of a deadline-aware flow; or
- generate an early congestion message and send the early congestion message to a sender of a deadline-aware flow;
thereby triggering the early congestion notification.

Early congestion notification may be a forward congestion notification, intended for the endpoint of the deadline-aware flows. In this case, the early congestion signal generator marks one or more packets of a deadline-aware flow for which the respective required deadline for delivery at the endpoint risks violation. Upon reception of one or more marked packets of one or more deadline-aware flows, the endpoint is aware that an early congestion had been detected and may take measures to avoid the early congestion. On the other hand, early congestion notification may be a backward congestion notification, intended for the sender or the plurality of senders of the deadline-aware flows. In this case, the early congestion signal generator generates an early congestion message and sends the early congestion message to the sender or to each sender of the plurality of senders of the deadline-aware flows. Upon reception of the early congestion message, the sender or the plurality of senders are aware that an early congestion had been detected and may take measures to avoid the early congestion.

According to an optional embodiment:
- the comparing unit is further adapted to compare the difference with a second threshold; and
- the early congestion signal generator is further adapted to stop the early congestion notification when the difference is above the second threshold.

This way, the early congestion detection device efficiently manages the consumption of the available capacity of the deadline-aware system in order to maximize the usage of the available capacity of the deadline-aware system.

According to an optional embodiment, the second threshold and the first threshold are equal.

The first and the second thresholds are equal and are referred to as a threshold. The early congestion detection device triggers an early congestion notification when the difference is below the threshold and stops the early congestion notification when the difference is above the threshold. The early congestion detection device therefore efficiently manages the consumption of the available capacity of the deadline-aware system in order to maximize the usage of the available capacity of the deadline-aware system.

According to an optional embodiment, a deadline-aware flow is received from a sender that automatically increases a capacity usage, and further:
- the second threshold is different from and higher than the first threshold;
- the early congestion signal generator is further adapted to:
- when the difference is above the second threshold, stop the early congestion notification;
- when the difference is below a first threshold, trigger a first early congestion notification thereby notifying the sender to stop an increase in the capacity usage; and
- when the difference is between the first threshold and the second threshold, trigger a second early congestion notification thereby notifying the sender to slow down an increase in the capacity usage.

The capacity usage corresponds to the percentage or the ratio of the available capacity of the deadline-aware system that is used to deliver deadline-aware flows to the endpoint. For example, the capacity usage may be the rate at which deadline-aware flows are sent to the endpoint, or the quality of the video played at the endpoint. The first early congestion notification may be a forward notification for which the early congestion signal generator marks packets of the deadline-aware flows or may be a backward notification for which the early congestion signal generator generates an early congestion message and sends the early congestion message to a sender of a deadline-aware flow. The second early congestion notification may be a forward notification for which the early congestion signal generator marks packets of the deadline-aware flows or may be a backward notification for which the early congestion signal generator generates an early congestion message and sends the early congestion message to a sender of a deadline-aware flow. The first early congestion notification and the second early congestion notification are identical. Alternatively, the first and the second early congestion notifications are different.

Deadline-aware flows are received from one sender. Alternatively, deadline-aware flows are received from one or more senders. The one or more senders automatically increase their usage of the available capacity of the deadline-aware system, thereby increasing the rate at which deadline-aware flows are sent to the endpoint of the deadline-aware system. As a consequence, the minimum capacity for timely delivery of deadline-aware flows automatically increases. When the difference between the available capacity of the deadline-aware system and the minimum capacity for timely delivery of deadline-aware flows is above the second threshold, the available capacity of the deadline-aware system is compatible with the timely delivery of the deadline-aware flows to the endpoint. The early congestion signal generator therefore stops the early congestion notification. When the difference between the available capacity of the deadline-aware system and the minimum capacity for timely delivery of deadline-aware flows is below the first threshold, the usage of the available capacity of the deadline-aware system for timely delivery of deadline-aware flows to the endpoint is maximized. The early congestion signal generator therefore triggers the first early congestion notification thereby notifying the sender to stop an increase in the capacity usage. When the difference between the available capacity of the deadline-aware system and the minimum capacity for timely delivery of deadline-aware flows is between the first threshold and the second threshold, the usage of the available capacity of the deadline-aware system for timely delivery of deadline-aware flows to the endpoint is almost maximized. The early congestion signal generator therefore triggers the second early congestion notification thereby notifying the sender to slow down an increase in the capacity usage.

According to a second aspect of the invention, there is provided a method for detecting an early congestion for deadline-aware flows in a deadline-aware system, the method comprising the steps of:
- receiving a plurality of deadline-aware flows, each deadline-aware flow comprising a respective required deadline for delivery to an endpoint by the deadline-aware system;
- calculating a minimum capacity required for timely delivery of the deadline-aware flows;
- measuring an available capacity of the deadline-aware system;
- calculating a difference between the available capacity and the minimum capacity;
- comparing the difference with a first threshold; and
- triggering an early congestion notification when the difference is below the first threshold.

The method for detecting an early congestion for deadline-aware flows in accordance with the present invention is adapted to determine whether the available capacity of the deadline-aware system is sufficient to serve the current capacity usage of the deadline-aware system by a plurality of deadline-aware flows with deadline requirements. The available capacity of the deadline-aware system is for example an available bandwidth of the deadline-aware system, or a measured actual delivery time of the deadline-aware flows, etc. Upon reception of deadline-aware flows, the minimum capacity that is required to deliver all the deadline-aware flows according to deadline requirements to an endpoint of the deadline-aware system is calculated, i.e. the minimum capacity that is required to deliver all the deadline-aware flows before or at their respective required deadlines for delivery to the endpoint. For example, the minimum capacity is the minimum bandwidth required for timely delivery of the deadline-aware flows, or the maximum requested delivery time of each of the deadline-aware flows to the endpoint, etc. If the difference between the available capacity and the minimum capacity of the deadline-aware system is above a first threshold, the available capacity of the deadline-aware system allows to deliver all the deadline-aware flows according to their respective required deadlines. In other words, if the difference between the available capacity and the minimum capacity of the deadline-aware system is above a first threshold, the likelihood that an early congestion occurs is low and the quality of experience of deadline-aware applications depending on the available capacity is therefore guaranteed. No early congestion notification is then triggered. On the other hand, if the difference between the available capacity and the minimum capacity of the deadline-aware system is below a first threshold, the likelihood that an early congestion occurs is high and the risk that the quality of experience of deadline-aware application is jeopardized increases. As a consequence, an early congestion notification in order to avoid violation of the deadlines of the deadline-aware flows is triggered, thereby notifying the deadline-aware system that an early congestion has been detected. In other words, the method according to the present invention pro-actively triggers early congestion notification when early congestion is detected and before any deadline of the deadline-aware flows has been violated. Upon reception of the early congestion notification, sender-side measures are taken in order to avoid the detected early congestion. This pro-active design for the management of the consumption of the available capacity of the deadline-aware system is a simple solution to efficiently maximize the usage of the available capacity of the deadline-aware system.

The plurality of deadline-aware flows is sent by a sender of the deadline-aware system. According to an alternative embodiment, the plurality of deadline-aware flows is sent by more than one senders of the deadline-aware system. An endpoint of the deadline-aware system may be any entity of the deadline-aware system, for example a user, a router, an access point, a server of the deadline-aware system, etc.

According to an optional embodiment:
- the step of calculating a minimum capacity corresponds to calculating a minimum bandwidth required for timely delivery of the deadline-aware flow; and
- the step of measuring an available capacity of the deadline-aware system corresponds to measuring an available bandwidth of the deadline-aware system.

The minimum capacity corresponds to a minimum bandwidth required for timely delivery of the deadline-aware flow. The available capacity corresponds to an available bandwidth of the deadline-aware system. The closeness between the minimum bandwidth required for timely delivery of the deadline-aware flows and the available bandwidth of the deadline-aware system determines whether early congestion will occur, hence whether an early congestion notification shall be triggered.

According to an optional embodiment, the method comprises the steps of:
- the step of calculating a minimum capacity corresponds to calculating a requested maximum delivery time of each of the deadline-aware flows to the endpoint;
- the step of measuring an available capacity of the deadline-aware system corresponds to measuring a measured actual delivery time of the deadline-aware flows;
- the step of calculating a difference between the available capacity and the minimum capacity corresponds to calculating a difference between the requested maximum delivery time and the actual delivery time for each of the deadline-aware flows, thereby calculating an average running deadline for each of the deadline-aware flows; and
- the step of comparing the difference with a first threshold corresponds to comparing the difference with a first threshold for each of the deadline-aware flows.

The minimum capacity corresponds to a requested maximum delivery time of each of the deadline-aware flows to the endpoint. The available capacity corresponds to measured actual delivery times of the deadline-aware flows. The closeness between the requested maximum delivery time and the measured actual delivery time for each of the deadline-aware flows determines whether early congestion will occur, hence whether an early congestion notification shall be triggered.

### Brief Description of the Drawings

Fig. 1 schematically illustrates the evolution of the rate at which packets of flows are marked or dropped in the context of a Random Early Detection active queue management scheme forming part of the prior art.
Fig. 2 schematically illustrates an embodiment of an early congestion detection device according to the present invention.
Fig. 3 schematically illustrates the evolution of the bit-rate requested by three deadline-aware flows as a function of time and the resulting congestion indicators.
Fig. 4 schematically illustrates a flow chart for early congestion detection.

### Detailed Description of Embodiment(s)

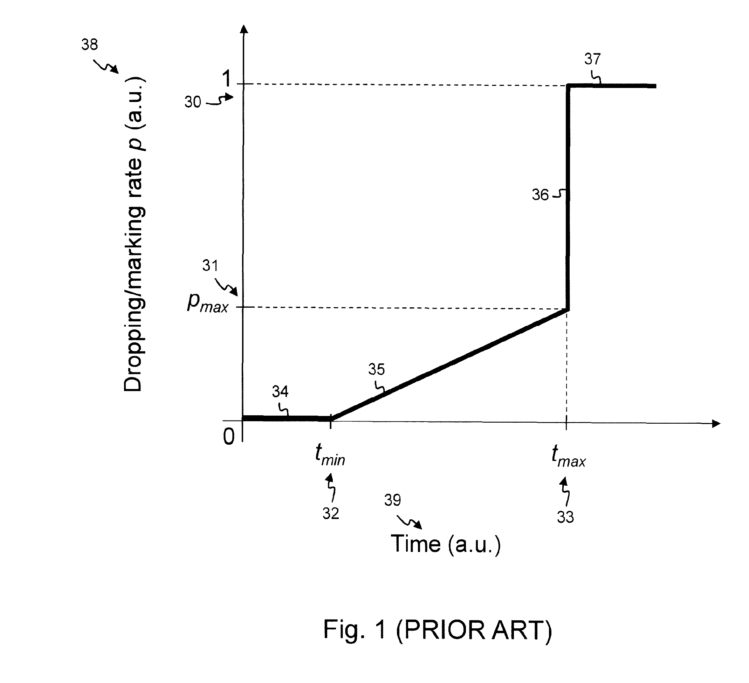

According to an embodiment shown in Fig. 1, in the context of an Adaptive Random Early Detection active queue management scheme forming part of the prior art, the rate *p* 38 at which packets of flows are dropped, or the rate *p* 38 at which packets are marked when Early Congestion Notification is activated, vary as a function of queue occupancy *q_{avg}.* As depicted in Fig. 1, the rate *p* 38 depends on two thresholds in time 39, i.e. *tₘᵢₙ* labelled 32 and *tmax* labelled 33. If the average length of the queue is smaller than *tₘᵢₙ* labelled 32, i.e. for the section 34 of Fig. 1, none of the packets are dropped or marked. If the average length of the queue is larger than *tₘₐₓ* labelled 33, i.e. for the section 37 of Fig. 1, all the packets are dropped or marked. In the case where *tₘᵢₙ*≤*q_{avg}*≤*tₘₐₓ,* i.e. for the sections 35 and 36 of Fig. 1, the dropping or marking rate p 38 increases proportionally to the average queue occupancy *q_{avg}.*

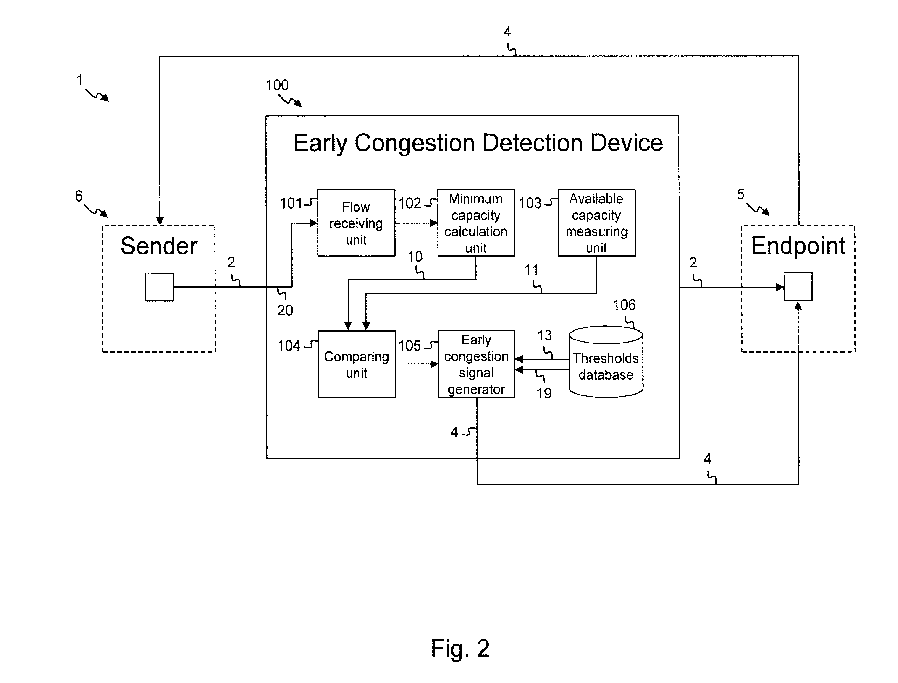

According to an embodiment depicted in Fig. 2, a deadline-aware system 1 comprises a sender 6, an early congestion detection device 100, and an endpoint 5. The sender 6 sends a plurality of deadline-aware flows 2 to the endpoint 5. According to an alternative embodiment, the deadline-aware system 1 comprises more than one sender 6 and/or more than one endpoint 5. According to a further alternative embodiment, more than one senders 6 send the plurality of deadline-aware flows 2 to the endpoint 5. Each deadline-aware flow 2 comprises a respective requested deadline 20 for delivery to the endpoint 5 by the deadline-aware system 1. The early congestion detection device 100 comprises a flow receiving unit 101, a minimum capacity calculation unit 102, an available capacity measuring unit 103, a comparing unit 104 and an early congestion signal generator 105. Optionally, the early congestion detection device 100 comprises a threshold database 106 comprising the first threshold 13 and/or the second threshold 19. The flow receiving unit 101 receives a plurality of flows 2 from one or more sender 6. The minimum capacity calculation unit 102 calculates a minimum capacity 10 required for timely delivery of the deadline-aware flows 2. The minimum capacity 10 is for example the minimum bandwidth 14 required for timely delivery of the deadline-aware flows 2, or for example the requested maximum delivery time 16 of each of the deadline-aware flows 2 to the endpoint 5. The available capacity measuring unit 103 measures an available capacity 11 of the deadline-aware system 1. The available capacity 11 is for example an available bandwidth 15 of the deadline-aware system 1, or is for example a measured actual delivery time 17 of the deadline-aware flows 2. The comparing unit 104 calculates a difference 12 between the available capacity 11 of the deadline-aware system 1 and the minimum capacity. 10 required for timely delivery of the deadline-aware flows 2. The early congestion signal generator 105 retrieves the first threshold 13 from a threshold database 106. Alternatively, the early congestion signal generator 105 comprises the first threshold 13 and comprises optionally the second threshold 19. The early congestion signal generator 105 triggers an early congestion notification 4 when the difference 12 is below the threshold 13. The early congestion notification 4 comprises marking packets 21 of a deadline-aware flow 2 and/or generating an early congestion message 40 and sending the early congestion message 40 to a sender 5 of the deadline-aware flow 2, thereby triggering the early congestion notification 4, and/or triggering the early congestion notification 4 for a sender 5 responsible for signaling the early congestion notification 4 to a sender 6 of the deadline-aware flows 2. Optionally, the comparing unit 104 compares the difference 12 with a second threshold 19 retrieved from the thresholds database 106 and the early congestion signal generator 105 stops the early congestion notification 4 when the difference 12 is above the second threshold 19. The second threshold 19 and the first threshold 13 are not equal and the second threshold 19 is higher than the first threshold 13. According to an alternative embodiment, the first and the second thresholds 13, 19 are equal. The sender 5 of the deadline-aware flows 2 automatically increases a capacity usage 60 of the available capacity 11 of the deadline-aware system 1. When the difference 12 is above the second threshold 19, the early congestion signal generator 105 stops the early congestion notification 4. When the difference 12 is below the first threshold 13, the early congestion signal generator 105 triggers a first early congestion notification 400, thereby notifying the sender 5 to stop an increase in the capacity usage 60. When the difference 12 is between the first threshold 13 and the second threshold 19, the early congestion signal generator 105 triggers a second early congestion notification 401, thereby notifying the sender 5 to slow down an increase in the capacity usage 60. The first and the second early congestion notifications 400, 401 are equal. Alternatively, the first and the second early congestion notifications 400, 401 are different from each other. The first early congestion notification 400 comprises marking packets 21 of a deadline-aware flow 2 and/or generating an early congestion message 40 and sending the early congestion message 40 to a sender 5 of the deadline-aware flow 2, thereby triggering the first early congestion notification 400. The second early congestion notification 401 comprises marking packets 21 of a deadline-aware flow 2 and/or generating an early congestion message 40 and sending the early congestion message 40 to a sender 5 of the deadline-aware flow 2, thereby triggering the second early congestion notification 401. According to an alternative embodiment, the deadline-aware system 1 does not comprise the early congestion detection device 100.

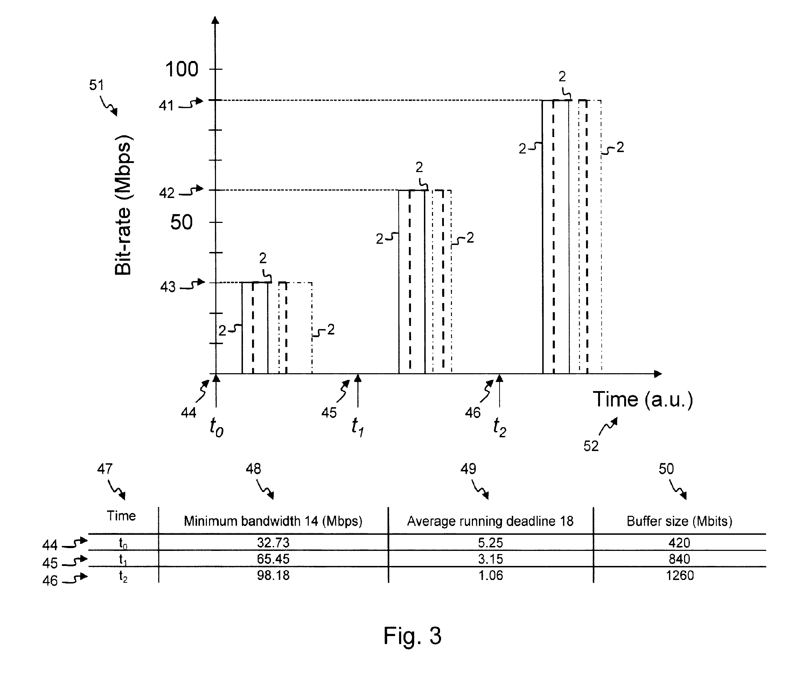

According to an embodiment depicted in Fig. 3, the bit-rate 51 in Mbps requested by deadline-aware flows 2 varies as a function of the time 52. At the time 52 to labelled 44, three deadline-aware flows 2 are sent for the first time by a sender 6. Each deadline-aware flow 2 requests a bit-rate 51 of 30Mbps. After being served, the deadline-aware flows 2 adapt their bit-rate 51 to 60Mbps at the time 52 t₁ labelled 45. Further adaptations of the bit-rate 51 are made at the time 52 t₂ labelled 46 with a bit-rate 51 of 90Mbps per deadline-aware flow 2. Upon arrival at an endpoint 5 of the deadline-aware system 1, the incoming packets 21 of the deadline-aware flows 2 are temporarily placed in a buffer to be scheduled by an earliest deadline first scheduler, referred to as an EDF scheduler. The buffer sizes at the times 52 to, t₁, and t₂ labelled respectively 44, 45, 46 are respectively 420Mbits, 840Mbits and 1260Mbits, as visible in column 50 of Fig. 3. The buffer size does not reveal the likelihood that network congestion is going to occur. The available bandwidth 11 of the deadline-aware system 1 depicted in Fig. 3 is equal to 100Mbps. As visible in the column 48 of Fig. 3, the three deadline-aware flows at to, t₁ and t₂ can be served in-time with the EDF scheduler as the minimum bandwidth 14 of column 48 is always smaller than the available bandwidth 11, i.e. the available capacity 11 of the deadline-aware system 1. Although the current three deadline-aware flows at to, t₁ and t₂ do not cause network congestion, the likelihood of future network congestion can be inferred. The minimum bandwidth 14 exhibits an increasing trend while the average running deadline 18 exhibits a decreasing trend, as visible in respectively columns 48 and 49 of Fig. 3. In case of no early congestion message 40 is forwarded back to the sender 6, the sender 6 keeps increasing the capacity usage 60, i.e. the sending rate or the video quality. If the three deadline-aware flows 2 arrive at the deadline-aware system 1 at a time 52 larger than the time 52 t₂ labelled 46 with a higher capacity usage 60, i.e. a higher sending rate, for example of 100Mbps per deadline-aware flow 2, network congestion will occur, as the minimum bandwidth 14 required to deliver the three deadline-aware flows 2 is 109.1 Mbps, while the deadline-aware system 1 only grants 100Mbps for the delivery of the deadline-aware flows 2. Early congestion is therefore detected and early congestion notification 4 is triggered to avoid network congestion.

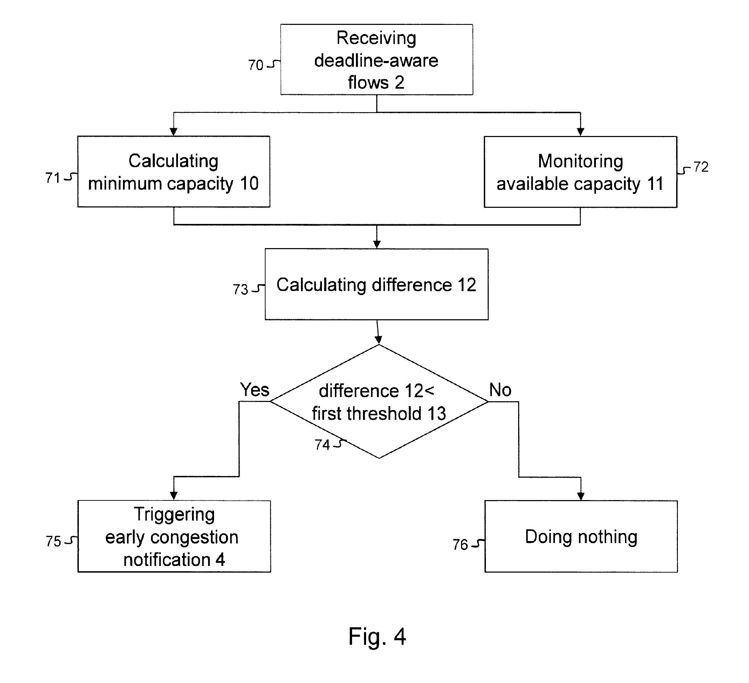

According to an embodiment shown in Fig. 4, a plurality of deadline-aware flows 2 are received in a deadline-aware system 1 in step 70, each deadline-aware flow 2 comprising a respective required deadline 20 for timely delivery to an endpoint 5 by the deadline-aware system 1. A minimum capacity 10 for timely delivery of the deadline-aware flows 2 is calculated in step 71. An available capacity 11 of the deadline-aware system 1 is calculated in step 72. A difference 12 between the available capacity 11 and the minimum capacity 10 is calculated in step 73. The difference 12 is compared to a first threshold 13 in step 74. If the difference 12 is below the first threshold 13, an early congestion notification 4 is triggered in step 75. If the difference 12 is equal to or above the first threshold 13, no early congestion notification 4 is triggered as depicted in step 76.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An early congestion detection device (100) for deadline-aware flows (2) in a deadline-aware system (1), said early congestion detection device (100) comprising:
- a flow receiving unit (101), adapted to receive a plurality of said deadline-aware flows (2), each deadline-aware flow (2) comprising a respective required deadline (20) for delivery to an endpoint (5) by said deadline-aware system (1);
- a minimum capacity calculation unit (102), adapted to calculate a minimum capacity (10) required for timely delivery of a deadline-aware flow (2);
- an available capacity measuring unit (103), adapted to measure an available capacity (11) of said deadline-aware system (1);
- a comparing unit (104), adapted to calculate a difference (12) between said available capacity (11) and said minimum capacity (10) and further adapted to compare said difference (12) with a first threshold (13); and
- an early congestion signal generator (105), adapted to trigger an early congestion notification (4) when said difference (12) is below said first threshold (13).

2. An early congestion detection device (100) according to claim 1, wherein:
- said minimum capacity (10) relates to a minimum bandwidth (14) required for timely delivery of said deadline-aware flows (2); and
- said available capacity (11) relates to an available bandwidth (15) of said deadline-aware system (1).

3. An early congestion detection device (100) according to claim 1, wherein:
- said minimum capacity (10) relates to a requested maximum delivery time (16) of each of said deadline-aware flows (2) to said endpoint (5);
- said available capacity (11) relates to a measured actual delivery time (17) of said deadline-aware flows (2);
- said comparing unit (104) is adapted to:
- calculate a difference (12) between said requested maximum delivery time (16) and said actual delivery time (17) for each of said deadline-aware flows (2), thereby calculating an average running deadline (18) for each of said deadline-aware flows (2); and
- compare said average running deadline (18) with said first threshold (13) for each of said deadline-aware flows (2).

4. An early congestion detection device (100) according to claim 1, wherein said early congestion signal generator (105) is adapted to:
- mark packets (21) of a deadline-aware flow (2); or
- generate an early congestion message (40) and send said early congestion message (40) to a sender (6) of a deadline-aware flow (2);
thereby triggering said early congestion notification (4).

5. An early congestion detection device (100) according to claim 1, wherein:
- said comparing unit (104) is further adapted to compare said difference (12) with a second threshold (19); and
- said early congestion signal generator (105) is further adapted to stop said early congestion notification (4) when said difference (12) is above said second threshold (19).

6. An early congestion detection device (100) according to claim 5, wherein said second threshold (19) and said first threshold (13) are equal.

7. An early congestion detection device (100) according to claim 5, wherein a deadline-aware flow (2) is received from a sender (6) that automatically increases a capacity usage (60), and wherein further:
- said second threshold (19) is different from and higher than said first threshold (13);
- said early congestion signal generator (105) is further adapted to:
- when said difference (12) is above said second threshold (19), stop said early congestion notification (4);
- when said difference (12) is below a first threshold (13), trigger a first early congestion notification (400) thereby notifying said sender (6) to stop an increase in said capacity usage (60); and
- when said difference (12) is between said first threshold (13) and said second threshold (19), trigger a second early congestion notification (401) thereby notifying said sender (6) to slow down an increase in said capacity usage (60).

8. A method for detecting an early congestion for deadline-aware flows (2) in a deadline-aware system (1), said method comprising the steps of:
- receiving a plurality of said deadline-aware flows (2), each deadline-aware flow (2) comprising a respective required deadline (20) for delivery to an endpoint (5) by said deadline-aware system (1);
- calculating a minimum capacity (10) required for timely delivery of said deadline-aware flows (2);
- measuring an available capacity (11) of said deadline-aware system (1);
- calculating a difference (12) between said available capacity (11) and said minimum capacity (10);
- comparing said difference (12) with a first threshold (13); and
- triggering an early congestion notification (4) when said difference (12) is below said first threshold (13).

9. A method according to claim 8, wherein:
- said step of calculating a minimum capacity (10) corresponds to calculating a minimum bandwidth (14) required for timely delivery of said deadline-aware flow (2); and
- said step of measuring an available capacity (11) of said deadline-aware system (1) corresponds to measuring an available bandwidth (15) of said deadline-aware system (1).

10. A method according to claim 8, wherein said method comprises the steps of:
- said step of calculating a minimum capacity (10) corresponds to calculating a requested maximum delivery time (16) of each of said deadline-aware flows (2) to said endpoint (5);
- said step of measuring an available capacity (11) of said deadline-aware system (1) corresponds to measuring a measured actual delivery time (17) of said deadline-aware flows (2);
- said step of calculating a difference (12) between said available capacity (11) and said minimum capacity (10) corresponds to calculating a difference (12) between said requested maximum delivery time (16) and said actual delivery time (17) for each of said deadline-aware flows (2), thereby calculating an average running deadline (18) for each of said deadline-aware flows (2; and
- said step of comparing said difference (12) with a first threshold (13) corresponds to comparing said difference (12) with a first threshold (13) for each of said deadline-aware flows (2).
